# FASCICULE DE BREVET EUROPEEN

(11) **EP 2 170 704 B1**
(45) Date de publication et mention de la délivrance du brevet: **25.05.2011**
(21) Numéro de dépôt: 08761221.4
(22) Date de dépôt: 19.06.2008
(51) Int. Cl.: B64D 27/26

(54) **DISPOSITIF D'ACCROCHAGE DE MOTEUR D'AERONEF ET PROCEDE DE MONTAGE D'UN MOTEUR D'AERONEF AU MOYEN D'UN TEL DISPOSITIF**
VORRICHTUNG ZUR KUPPLUNG EINES LUFTFAHRZEUGTRIEBWERKS UND VERFAHREN ZUR BEFESTIGUNG EINES LUFTFAHRZEUGTRIEBWERKS MITTELS SOLCH EINER VORRICHTUNG
DEVICE FOR COUPLING AN AIRCRAFT ENGINE AND METHOD FOR MOUNTING AN AIRCRAFT ENGINE BY MEANS OF SUCH A DEVICE

(30) Priorité: 21.06.2007 FR 0755937
(43) Date de publication de la demande: 07.04.2010
(73) Titulaire: AIRBUS OPERATIONS, 31060 Toulouse (FR)
(72) Inventeur: COMBES, Stéphane, F-31660 Buzet Sur Tarn (FR); ROVATTI, Didier, F-31400 Toulouse (FR)
(74) Mandataire: Ilgart, Jean-Christophe
(86) Numéro de dépôt international: PCT/EP2008/057786
(87) Numéro de publication internationale: WO 2008/155386

(56) Documents cités:
- EP-A- 0 564 126
- EP-A- 1 103 463
- EP-A- 1 157 925

## Description

### DOMAINE TECHNIQUE ET ART ANTERIEUR

La présente invention se rapporte de façon générale à un dispositif d'accrochage d'un moteur d'aéronef, par exemple destiné à être interposé entre une voilure d'aéronef et le moteur concerné, ainsi qu'à un ensemble moteur comprenant un tel dispositif d'accrochage.

L'invention peut être utilisée sur tout type d'aéronef équipé de turboréacteurs ou de turbopropulseurs.

Ce type de dispositif d'accrochage, également appelé mât d'accrochage ou « EMS » (de l'anglais «Engine Mounting Structure»), peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

Un tel dispositif d'accrochage est en effet prévu pour former l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, dite structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur.

Dans l'art antérieur, ce dispositif de reprise comprend par exemple deux bielles latérales raccordées d'une part au carter du turbomoteur, et d'autre part rapportées sur un palonnier, lui-même articulé sur la structure rigide du dispositif d'accrochage.

De la même façon, le dispositif d'accrochage comporte également une autre série d'attaches constituant un système de montage interposé entre la structure rigide et la voilure de l'aéronef, ce système étant habituellement composé de deux ou trois attaches.

Enfin, le mât est pourvu d'une structure secondaire assurant la ségrégation et le maintien des systèmes tout eh supportant des carénages aérodynamiques.

Comme cela a été évoqué ci-dessus, les solutions proposées antérieurement prévoient que le dispositif de reprise des efforts de poussée intègre un palonnier articulé sur la structure rigide, par l'intermédiaire d'un axe de liaison. A ce titre, il est indiqué que, pour assurer une fonction dite « Fail-Safe » pour la transmission d'efforts selon la direction longitudinale, le palonnier est habituellement réalisé à l'aide de deux ferrures superposées, de même que l'axe de liaison prend quant à lui la forme d'un axe doublé. Ainsi, en cas de rupture de l'une des deux ferrures superposées constituant le palonnier, c'est l'autre ferrure qui assure seule la reprise des efforts provenant des bielles latérales, et, en cas de rupture de l'axe extérieur de l'axe de liaison doublé, c'est alors l'axe intérieur qui prend le relais pour la reprise et la transmission de ces mêmes efforts selon la direction longitudinale.

Il est connu des dispositifs d'accrochage dans lesquels l'attache moteur arrière et le dispositif de reprise des efforts sont distincts et décalés longitudinalement. L'accrochage du moteur au longeron inférieur du caisson s'effectue au moyen d'un axe solidaire du moteur et traversant le longeron. Cet axe orthogonal au plan des bielles de poussée est généralement incliné par rapport à la direction verticale. Cette inclinaison rend le montage complexe et impose d'utiliser un outillage particulier pour permettre une telle fixation.

Par ailleurs, certains moteurs d'aéronefs ont des diamètres extérieurs relativement importants par rapport aux diamètres classiques des moteurs. Ceci impose de rapprocher le moteur au plus près de la voilure afin de réduire les impacts de garde au sol. Ce rapprochement limite alors la possibilité d'utilisation d'outillages spéciaux.

Un dispositif de reprise des efforts est connu du document FR 2 887 850, pour lequel la fonction fail-safe est obtenue notamment au moyen de butées prévues en avant du dispositif de reprise des efforts, les butées étant fixées directement sur le caisson. Or, dans certaines applications, le caisson présente une largeur relativement faible ne permettant pas la fixation de telles butées. Deux palonniers superposés sont également prévus, un premier palonnier pour la reprise de poussée en fonctionnement normal, et un deuxième palonnier de reprise de la poussée en cas de rupture du premier palonnier.

Une autre solution pour garantir la fonction fail-safe est connue à partir du document EP-A-0 564 126.

C'est par conséquent un but de la présente invention d'offrir un dispositif d'accrochage comportant un dispositif de reprise des efforts de poussée du moteur à un mât assurant la fonction fail-safe, i.e. la redondance de la reprise des efforts de poussée, compact et de masse réduite et permettant un montage simple et rapproché du moteur sur le mât.

### EXPOSÉ DE L'INVENTION

Le but précédemment énoncé est atteint par un dispositif d'accrochage de moteur pour aéronef comportant un dispositif de reprise des efforts comportant deux bielles reliées à un palonnier relié par une ferrure intermédiaire à une ferrure fixée sur le mât et une ferrure redondante recouvrant le palonnier et la ferrure intermédiaire et connectée au palonnier et à la ferrure fixée sur le caisson, et connectée avec jeu directement aux bielles, la liaison entre la ferrure fixée sur le caisson et la ferrure intermédiaire et la ferrure redondante s'effectue par l'insertion d'un axe latéralement.

En d'autres termes, le dispositif comporte une ferrure supplémentaire unique apte à transmettre les efforts de poussée directement à une ferrure fixée sur le caisson en cas de rupture d'une bielle ou du palonnier.

Les ferrures de butée sont supprimées, ceci évite alors la nécessité de points de reprise à l'intérieur du caisson du mât, ce qui permet un gain de masse significatif. Par ailleurs, un mât très fin peut être mis en oeuvre.

La présente invention a alors principalement pour objet un dispositif d'accrochage d'un moteur d'aéronef comportant une structure rigide et des moyens d'accrochage dudit moteur sur ladite structure rigide, lesdits moyens d'accrochage comportant un dispositif de reprise des efforts de poussée générés par le moteur, ledit dispositif de reprise des efforts comportant deux bielles liées mécaniquement à un palonnier au niveau d'une extrémité arrière par une première liaison mécanique, une ferrure de raccordement fixée sur la structure rigide à laquelle est lié mécaniquement le palonnier par une ferrure de jonction au moyen d'un axe de liaison introduit orthogonalement à un plan médian vertical et longitudinal du dispositif d'accrochage, une ferrure supplémentaire à laquelle sont liés mécaniquement avec les bielles, le palonnier et la ferrure de raccordement, un jeu étant prévu au niveau de la liaison mécanique entre les bielles et la ferrure supplémentaire, la liaison entre la ferrure supplémentaire et la ferrure de raccordement étant réalisée au moyen de l'axe de liaison liant la ferrure de raccordement et la ferrure de jonction, ledit axe de liaison étant introduit latéralement, orthogonalement au dit plan médian du dispositif d'accrochage.

L'axe de liaison liant mécaniquement la ferrure de jonction et la ferrure de raccordement et l'axe de liaison liant mécaniquement la ferrure supplémentaire et la ferrure de jonction sont avantageusement confondus, ce qui simplifie davantage le dispositif, ainsi que le montage.

La ferrure de jonction peut comporter à une première extrémité longitudinale une platine liée mécaniquement par un axe de liaison au palonnier et à une deuxième extrémité longitudinale une chape pour recevoir la ferrure de raccordement.

Dans un exemple de réalisation, chacune des bielles est liée mécaniquement au palonnier par un axe de liaison, la ferrure supplémentaire comporte une première chape recevant les extrémités arrière des bielles et le palonnier, dont les deux branches comportent des alésages pour recevoir les extrémités des axes de liaison liant les bielles au palonnier et l'axe de liaison liant le palonnier à la ferrure de jonction, et une deuxième chape recevant la chape de la ferrure de jonction, ladite deuxième chape comportant des branches munies d'un alésage pour le passage de l'axe de liaison avec la ferrure de raccordement. Ainsi les mêmes axes de liaison sont utilisés pour lier mécaniquement la ferrure supplémentaire aux bielles, au palonnier et à la ferrure de raccordement, et pour lier les bielles au palonnier, le palonnier à la ferrure de jonction et la ferrure de jonction à la ferrure de raccordement, ce qui simplifie et allège le dispositif selon l'invention.

Des nervures de renfort peuvent être prévues entre la première chape et la deuxième chape de la ferrure supplémentaire, permettant d'utiliser des chapes d'épaisseur réduite.

Le dispositif d'accrochage selon la présente invention peut comporter également une attache moteur avant et une attache moteur arrière, l'attache moteur arrière étant distincte du dispositif de reprise des efforts.

Avantageusement, au moins une vis de traction est prévue entre la ferrure de jonction, la ferrure supplémentaire et la ferrure de raccordement, dont l'axe est non parallèle à l'axe de liaison, avantageusement orthogonal à l'axe de liaison pour supprimer l'instabilité du montage des ferrures supplémentaire et de jonction sur la ferrure de raccordement.

La présente invention a également pour objet un ensemble moteur comprenant un moteur et un dispositif d'accrochage du moteur, caractérisé en ce que ledit dispositif d'accrochage est un dispositif selon la présente invention.

La présente invention a également pour objet un aéronef comportant au moins un ensemble moteur selon la présente invention, assemblé sur une aile ou sur une partie arrière de fuselage de cet aéronef.

La présente invention a également pour objet un procédé de montage d'un moteur d'aéronef sur un mât au moyen d'un dispositif d'accrochage selon la présente invention comportant les étapes :
- de hissage du moteur muni des bielles, du palonnier, de la ferrure de jonction et de la ferrure supplémentaire en direction du mât muni de la ferrure de raccordement,
- de mise en correspondance des alésages de la ferrure de raccordement, de la ferrure supplémentaire et de la ferrure de jonction,
- d'insertion dans lesdits alésages d'un axe de liaison latéralement par rapport à un plan médian vertical et longitudinal du dispositif d'accrochage.

De manière avantageuse, le procédé selon l'invention comporte également l'étape de fixation de la ferrure de jonction sur la ferrure de raccordement selon une direction non parallèle à l'axe de liaison afin de supprimer l'instabilité du montage des ferrures supplémentaire et de jonction sur la ferrure de raccordement.

### BRÈVE DESCRIPTION DES DESSINS

La présente invention sera mieux comprise avec la description qui va suivre et les dessins en annexe, sur lesquels :
- la figure 1 représente une vue schématique générale de côté d'un ensemble moteur pour aéronef, comprenant un mât d'accrochage,
- la figure 2 est une vue en perspective de trois quart de dessus d'un dispositif de reprise des efforts selon la présente invention, une nervure du mât à laquelle est fixée une partie du dispositif de reprise des efforts étant représentée,

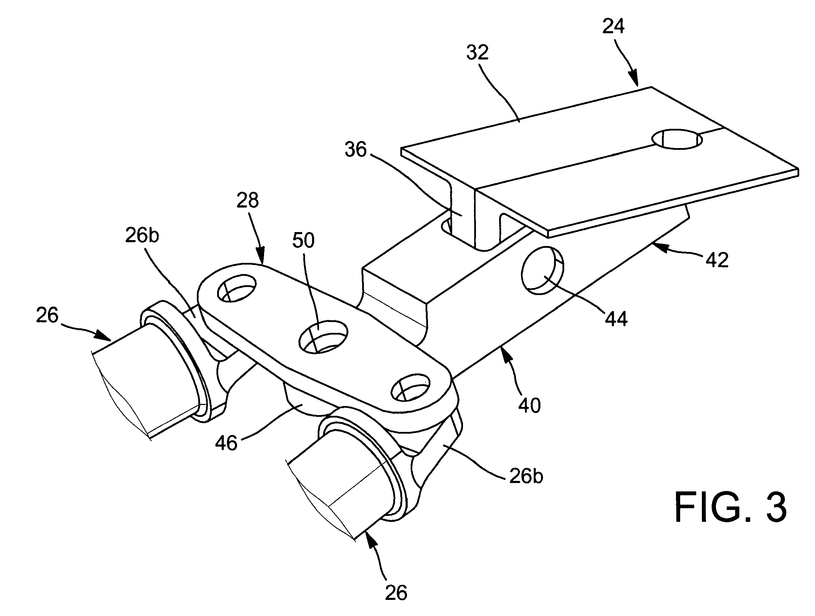

- la figure 3 est une vue identique à celle de la figure 1, la ferrure supplémentaire assurant la fonction fail-safe ayant été omise,

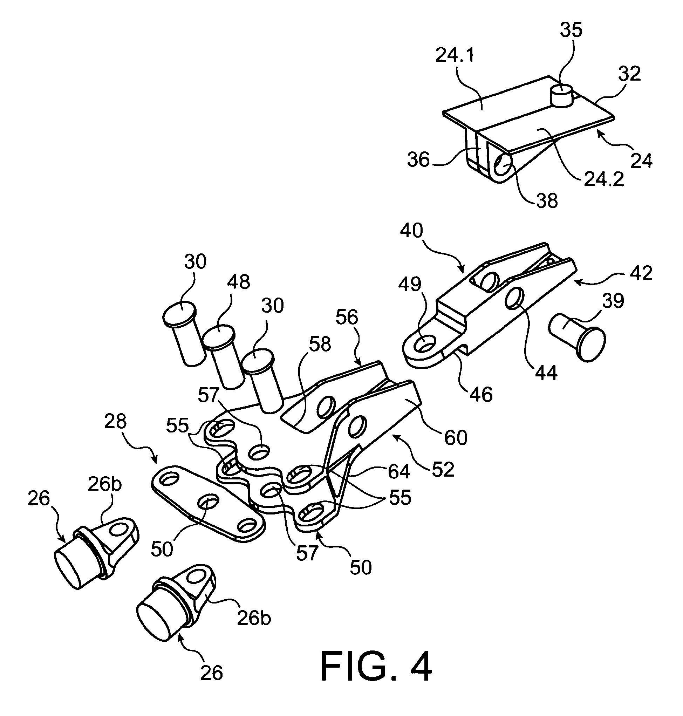

- la figure 4 est une vue éclatée du dispositif de reprise des efforts de la figure 1, la nervure du mât ayant été omise ;
- la figure 5 est une vue en coupe longitudinale du dispositif de reprise des efforts de la figure 1 du côté du mât ;
- la figure 6 est une représentation schématique d'un exemple de fixation d'un axe de poussée sur un mât mis en oeuvre dans le dispositif de reprise des efforts selon l'invention.

### EXPOSÉ DÉTAILLÉ DE MODES DE RÉALISATION PARTICULIERS

Dans la description qui va suivre, le terme « longitudinal » est à considérer par rapport à l'axe X.

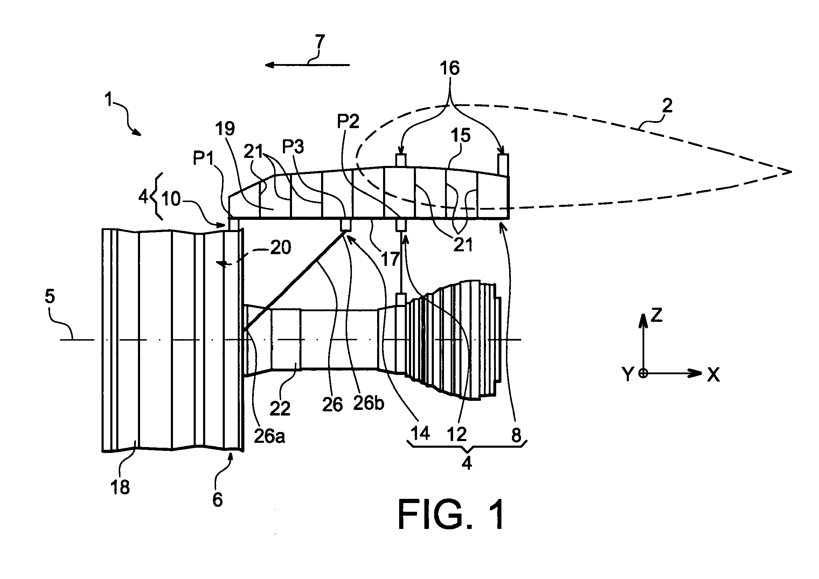

En référence à la figure 1, on voit un ensemble moteur 1 pour aéronef destiné à être fixé sous une aile 2 de cet aéronef représentée uniquement schématiquement en pointillés pour des raisons de clarté, cet ensemble 1 comportant un dispositif d'accrochage 4, ainsi qu'un moteur 6 tel qu'un turboréacteur accroché sous ce dispositif 4.

Globalement, le dispositif d'accrochage 4 comporte une structure rigide 8 portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est à noter que l'ensemble 1 est destiné à être entouré d'une nacelle (non représentée), et que le dispositif d'accrochage 4 comporte une autre série d'attaches 16 permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6, cette direction X étant parallèle à un axe longitudinal de ce turboréacteur 6 et à celle du dispositif 14. D'autre part, on appelle Y la direction orientée transversalement par rapport au dispositif 4 et également assimilable à la direction transversale du turboréacteur 6 et à celle du dispositif 14, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut voir les deux attaches moteur 10, 12, la série d'attaches 16, le dispositif de reprise des efforts de poussée 14, et la structure rigide 8 du dispositif d'accrochage 4. Les autres éléments constitutifs non représentés de ce dispositif 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 20 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans cet exemple de réalisation de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est réalisé par l'assemblage d'un longeron supérieur 15, d'un longeron inférieur 17, et de deux longerons/panneaux latéraux 19 (un seul étant visible en raison de la vue de côté), ces éléments 15,17,19 étant raccordés entre eux par l'intermédiaire de nervures transversales 21 prenant chacune globalement la forme d'un rectangle. Ainsi, les nervures 21 s'étendent dans des plans YZ, les longerons 15, 17 s'étendent grossièrement dans des plans XY, et les panneaux latéraux 19 dans des plans XZ.

Les moyens d'accrochage comportent tout d'abord l'attache moteur avant 10 interposée entre une extrémité avant de la structure rigide 8, et une partie supérieure du carter de soufflante 26. Néanmoins, il serait également possible de prévoir que l'attache moteur avant 10 soit fixée sur un carter de liaison entre le carter central et le carter de soufflante, comme cela est connu de l'homme du métier. L'attache moteur avant 10, conçue de manière classique et connue de l'homme du métier, est fixée en un premier point Pi de la structure rigide 8, cette dernière étant également dénommée structure primaire.

D'autre part, l'attache moteur arrière 12, également réalisée de façon classique et connue de l'homme du métier, est quant à elle interposée entre la structure rigide 8 et le carter central 22, et fixée en un second point P2 de la structure rigide 8 placé en arrière par rapport au point P1. Dans un exemple préféré de réalisation, le dispositif de reprise des efforts 14 est fixé au caisson en un troisième point P3, situé entre le premier point Pi et le second point P2.

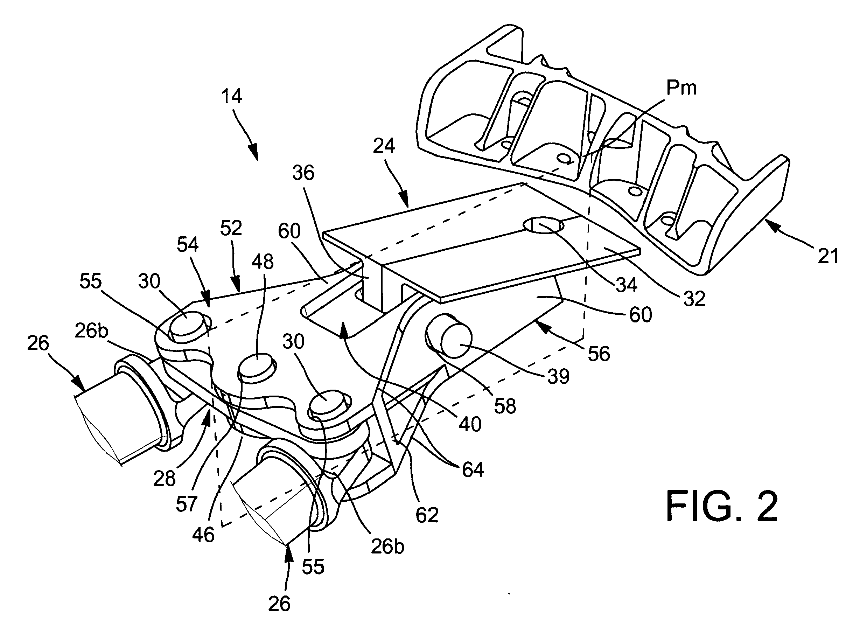

Sur la figure 2, on peut voir le détail du dispositif de reprise des efforts de poussée 14 selon la présente invention, transmettant les efforts de poussée du moteur au caisson 8 via des bielles 26 de poussée reliées mécaniquement à un palonnier 28 au moyen d'axes 30.

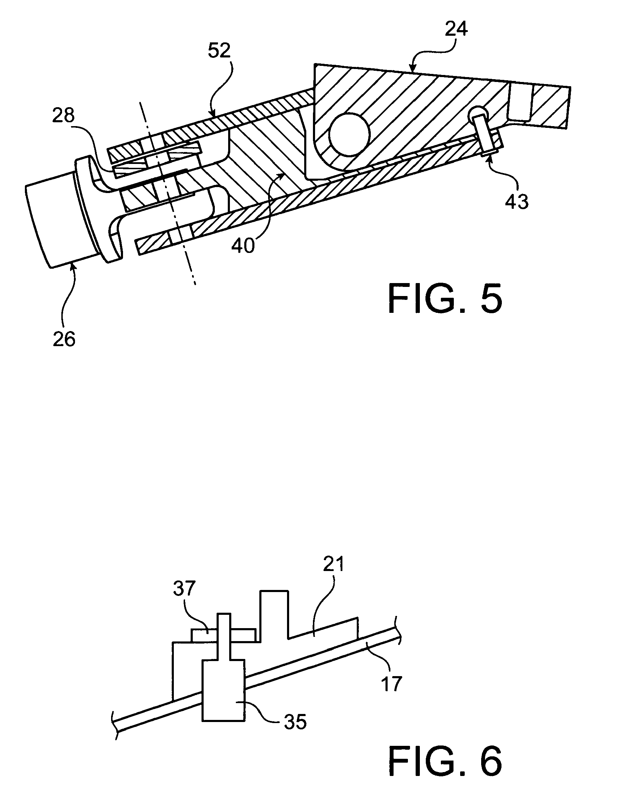

Le dispositif de reprise des efforts 14 comporte une ferrure de raccordement 24 destinée à être fixée sur le longeron inférieur 17 du caisson 8, cette ferrure de raccordement 24 étant destinée à la fixation du dispositif de reprise des efforts sur le caisson. Cette ferrure de raccordement 24 comporte une embase 32 fixée sur le longeron et comporte un alésage 34 pour la mise en place d'une extrémité d'un pion de poussée 35 (visible sur la figure 6), le pion 35 pénétrant par une autre extrémité dans une nervure transversale 21 du caisson 8 pour transmettre les efforts de poussée de la ferrure de raccordement 24 au caisson 8. Le pion de poussée 35 est monté sensiblement vertical.

Sur la figure 6, on peut voir une représentation schématique d'un exemple de fixation du pion de poussée 35 entre la ferrure de raccordement 24 et le caisson 8.

Le pion de poussée 35 entre le caisson 8 et la ferrure de raccordement 24 est solidaire de la nervure transversale 21 et est en saillie vers le bas du longeron inférieur 17. Le pion est maintenu dans la ferrure par un écrou 37.

La platine 32 de la ferrure de raccordement 24 est fixée sur le longeron inférieur par des moyens de fixation, par exemple au nombre de six aptes à tenir au cisaillement et à la traction.

De manière avantageuse, la ferrure de raccordement 24 est réalisée en deux parties 24.1, 24.2 symétriques par rapport au plan médian du dispositif de reprise des efforts, afin d'assurer la fonction fail-safe en cas de rupture de l'une d'entre elle.

La ferrure de raccordement 24 comporte également une pièce en saillie 36 orthogonale à l'embase 32 et contenue dans un plan médian Pm longitudinal et vertical du dispositif d'accrochage.

La pièce en saillie 36 comporte un alésage 38 orthogonal au plan médian Pm du dispositif d'accrochage et recevant un axe 39.

Le dispositif de reprise des efforts comporte également une ferrure de jonction 40 reliant le palonnier 28 à la ferrure de raccordement 24. La ferrure de jonction 40 comporte, à une première extrémité longitudinale, une chape 42 montée autour de la pièce en saillie 36 et comportant un alésage 44 dans chacune des branches de la chape 42, pour permettre la solidarisation de la ferrure de jonction 40 à la ferrure de raccordement 24 par le montage de l'axe 39. Le montage de l'axe 39 dans la chape 42 et la pièce en saillie 36 s'effectue latéralement, orthogonalement au plan médian Pm.

La ferrure de jonction 40 comporte également une platine 46 à une deuxième extrémité longitudinale contenue dans un plan orthogonal au plan médian Pm du dispositif d'accrochage, sur laquelle est monté le palonnier 28 au moyen d'un axe 48 traversant un alésage 49 réalisé dans la platine 46 et un alésage 50 réalisé dans une zone centrale du palonnier 28.

Selon la présente invention, le dispositif de reprise des efforts comporte une ferrure supplémentaire 52 destinée à assurer la fonction fail-safe. Dans l'exemple représenté, celle-ci recouvre le dispositif de reprise des efforts en fonctionnement normal, formé par les extrémités arrière 26b des bielles 26, le palonnier 28, la ferrure de jonction 40 et la ferrure de raccordement 24.

La ferrure supplémentaire 52 entoure par une extrémité longitudinale le palonnier et les extrémités arrières 26b des bielles 26 et par une autre extrémité longitudinale la ferrure de jonction 40.

La ferrure supplémentaire 52 comporte une première chape 54 à son extrémité avant recevant le palonnier 28 et les extrémités arrières 26b des bielles 26. Chacune des branches de la première chape 54 comporte chacune deux alésages 55 pour le passage des axes 30 et un alésage 57 pour le passage de l'axe 48, la périphérie des extrémités des axes 30 et 48 venant au moins en regard des parois des alésages 55, 57 respectivement.

Les axes 30 sont montés avec jeu dans les alésages 55.

On pourrait prévoir de supprimer l'alésage 57, l'axe 48 n'ayant alors aucun lien mécanique direct avec la ferrure supplémentaire, ce qui permet de raccourcir l'axe 48 et donc de réaliser un gain de matière et de masse.

Le dispositif selon la présente invention utilise les mêmes axes pour lier mécaniquement les éléments reprenant les efforts de poussée en fonctionnement normal et les pièces reprenant les efforts de poussée en fonctionnement dégradé, le nombre de pièces mis en oeuvre est donc réduit, la masse du dispositif ainsi que son coût sont également diminués.

De manière avantageuse, les branches de la première chape 54 ont un profil suivant les alésages 55, 57 pour réduire la quantité de matière nécessaire et donc la masse de la ferrure supplémentaire 52, ainsi chaque branche comporte un profil muni des trois renflements au niveau des alésages.

Les axes 30 sont montés avec jeu dans la première chape 54, de manière à ce que celle-ci ne soit pas sollicitée en fonctionnement normal, i.e. lorsque les composants du dispositif de reprise des efforts sont intacts.

La ferrure supplémentaire 52 comporte à son extrémité arrière une deuxième chape 56 recevant la chape 42 de la ferrure de jonction 40. Cette chape 56 comporte des alésages 58 pour le passage de l'axe 39. L'axe 39 est monté ajusté dans les alésages 58, du type H7g6.

Dans l'exemple représenté, les branches 60 de la deuxième chape 56 sont orthogonales à un fond 58 de la première chape 54 et parallèles au plan médian Pm, permettant l'insertion de la pièce en saillie 36 de la ferrure de raccordement 24, lorsque le moteur est hissé verticalement en direction du mât.

Les branches 60 de la deuxième chape 56 sont avantageusement reliées au fond 58 de la première chape 54 par des nervures de renfort 64, ce qui permet de réduire l'épaisseur et donc la masse du fond 62 et des branches 60, et par conséquent la masse de la ferrure supplémentaire 52.

De manière avantageuse, comme on peut le voir sur la figure 5, la ferrure de jonction 40 et la ferrure supplémentaire 52, sont fixées à la ferrure de raccordement 24 par au moins une vis de traction 43 associée à un écrou de serrage. Cette vis de traction 43 a un axe non parallèle à celui de l'axe de liaison 39, avantageusement orthogonal à celui-ci, ce qui permet de maintenir en position la ferrure de jonction 40 et la ferrure supplémentaire 52 et de supprimer l'instabilité de rotation autour de l'axe 39.

Nous allons maintenant décrire les chemins suivis par les efforts dans différents états du dispositif de reprise des efforts.

Lorsque le dispositif de reprise des efforts 14 est intact, les efforts de poussée sont transmis des bielles 26 au palonnier 28 par les axes 30, puis du palonnier 28 à la ferrure de jonction 40 par l'axe 48, puis de la ferrure de jonction 40 à la ferrure de raccordement 24 par l'axe 39, puis de la ferrure de raccordement 24 au caisson 48 par le pion de poussée.

En cas de rupture de l'une des bielles 26, le palonnier bascule autour de l'axe 48, l'axe 30 de la bielle intacte 26 vient en butée contre les alésages 55 des branches de la première chape 54 de la ferrure supplémentaire 52. Les efforts de poussée sont alors transmis de la bielle intacte 26 à la ferrure de raccordement 24 par l'axe 39 via la ferrure supplémentaire 52.

Dans le cas d'une rupture du palonnier, les deux axes 30 viennent en butée contre les alésages 55. Les efforts de poussée sont alors transmis des bielles 26 à la ferrure supplémentaire 52 par les axes 30 et de la ferrure supplémentaire 52 à la ferrure de raccordement 24 par l'axe 39 et de la ferrure de raccordement 24 au caisson 8 par le pion de poussée 35.

Le dispositif de reprise des efforts de poussée du moteur est simple, puisqu'il ne met en oeuvre qu'une seule pièce : la chape supplémentaire 52, pour réaliser la fonction fail-safe. Ce dispositif est également très compact et relativement léger par rapport aux dispositifs de l'état de la technique. Il permet d'utiliser un caisson 8 relativement étroit.

En outre, le dispositif selon la présente invention évite les chocs sur le longeron, comme c'est le cas lorsque des butées sont prévues sur le longeron, notamment lors d'une rupture de bielle.

Par ailleurs, le dispositif permet un montage très simple, puisque le raccordement du moteur au caisson par le dispositif de reprise des efforts de poussée s'effectue au moyen d'un seul axe introduit par le côté qui est dégagé. Aucun outil particulier n'est alors requis. On peut prévoir avantageusement des vis de traction pour améliorer la stabilité du montage.

Nous allons maintenant décrire le raccordement du moteur au le caisson 8.

La ferrure de raccordement 24 est fixée sur le longeron inférieur 17 par tout moyen adapté.

La partie du dispositif de reprise des efforts composés des bielles 26, du palonnier 28, de la ferrure de jonction 40 et de la ferrure supplémentaire 52 sont solidaire du moteur, en particulier du carter de soufflante par les extrémités avant 26a des bielles 26.

La ferrure supplémentaire 52 est montée sur le palonnier et la ferrure de jonction 40 par introduction de la ferrure de jonction 40 dans la première chape 54 de la ferrure supplémentaire 52 jusqu'à ce que la première chape 54 se superpose au palonnier 28.

Le moteur équipé de la partie du dispositif de reprise des efforts de poussée mentionnée ci-dessus est hissé en direction du caisson 8, la partie en saillie 36 de la ferrure de raccordement 24 est introduite dans la chape 42 de la ferrure de jonction 40 et l'axe 39 est introduit latéralement. Ce montage simple permet d'éviter le recours à un outillage de pose et de dépose moteur particulier, comme c'est le cas dans de nombreux dispositifs de l'état de la technique.

Avantageusement, on prévoit la mise en place d'au moins une vis de traction entre la ferrure de jonction, la ferrure supplémentaire et la ferrure de raccordement orthogonalement à l'axe de liaison 39.

Par ailleurs le montage et le démontage sont facilités du fait de la grande accessibilité aux alésages de réception de l'axe 39.

Le dispositif de reprise 14 est ainsi en mesure de reprendre des efforts exercés principalement selon la direction longitudinale X.

De cette manière, les efforts s'exerçant selon la direction longitudinale X sont exclusivement repris par le dispositif de reprise des efforts de poussée 14, les efforts s'exerçant selon la direction transversale Y sont repris conjointement par les attaches avant 10 et arrière 12, et les efforts s'exerçant selon la direction verticale Z sont également repris conjointement par l'attache avant 10 et les deux demi-attaches de l'attache arrière 12.

D'autre part, la reprise du moment s'exerçant selon la direction X est assurée uniquement par les deux demi-attaches de l'attache arrière 12, tandis que la reprise des moments s'exerçant selon les directions Y et Z est assurée conjointement par ces deux attaches moteur 10, 12.

## Revendications

1. Dispositif d'accrochage d'un moteur d'aéronef comportant une structure rigide et des moyens d'accrochage dudit moteur sur ladite structure rigide, lesdits moyens d'accrochage comportant un dispositif (14) de reprise des efforts de poussée générés par le moteur, ledit dispositif de reprise des efforts (14) comportant deux bielles (26) liées mécaniquement à un palonnier (28) au niveau d'une extrémité arrière (26b) par une première liaison mécanique, une ferrure de raccordement (24) fixée sur la structure rigide à laquelle est lié mécaniquement le palonnier (28) par une ferrure de jonction (40) au moyen d'un axe de liaison (39) introduit orthogonalement à un plan médian vertical et longitudinal (Pm) du dispositif d'accrochage, une ferrure supplémentaire (52) à laquelle sont liés mécaniquement les bielles (26), le palonnier (28) et la ferrure de raccordement (24), un jeu étant prévu au niveau de la liaison mécanique entre les bielles et la ferrure supplémentaire, la liaison entre la ferrure supplémentaire (52) et la ferrure de raccordement (24) étant réalisée au moyen de l'axe de liaison liant la ferrure de raccordement et la ferrure de jonction, ledit axe de liaison (39) étant introduit latéralement, orthogonalement au dit plan médian (Pm) du dispositif d'accrochage.

2. Dispositif d'accrochage selon la revendication 1, dans laquelle la ferrure de jonction comporte à une première extrémité longitudinale une platine (46) liée mécaniquement par un axe de liaison (48) au palonnier (28) et à une deuxième extrémité longitudinale une chape (42) pour recevoir la ferrure de raccordement (24)

3. Dispositif d'accrochage selon la revendication 1 ou 2, dans lequel chacune des bielles (26) est liée mécaniquement au palonnier (28) par un axe de liaison (30), et dans lequel la ferrure supplémentaire (52) comporte une première chape (54) recevant les extrémités arrière (26b) des bielles (26) et le palonnier (28), dont les deux branches comportent des alésages (55, 57) pour recevoir les extrémités des axes de liaison (30) liant les bielles (26) au palonnier (28) et l'axe de liaison (48) liant le palonnier (28) à la ferrure de jonction (40), et une deuxième chape (56) recevant la chape (42) de la ferrure de jonction (40), ladite deuxième chape (56) comportant des branches munies d'un alésage (58) pour le passage de l'axe de liaison (39) avec la ferrure de raccordement (24)

4. Dispositif d'accrochage selon la revendication 3, dans lequel des nervures de renfort (62) sont prévues entre la première chape (54) et la deuxième chape (56) de la ferrure supplémentaire (52).

5. Dispositif d'accrochage selon l'une des revendications précédentes, dans lequel au moins une vis de traction (43) est prévue entre la ferrure de jonction (40), la ferrure supplémentaire (52) et la ferrure de raccordement (24), d'axe non parallèle à l'axe de liaison (39).

6. Dispositif d'accrochage selon l'une des revendications précédentes, comportant également une attache moteur avant (10) et une attache moteur arrière (12), l'attache moteur arrière (12) étant distincte du dispositif de reprise des efforts.

7. Ensemble moteur (1) comprenant un moteur (6) et un dispositif d'accrochage du moteur (6), **caractérisé en ce que** ledit dispositif d'accrochage est un dispositif selon l'une quelconque des revendications précédentes.

8. Aéronef comportant au moins un ensemble moteur selon la revendication 7, assemblé sur une aile ou sur une partie arrière de fuselage de cet aéronef.

9. Procédé de montage d'un moteur d'aéronef sur un mât au moyen d'un dispositif d'accrochage selon l'une des revendications 1 à 6 comportant les étapes
- de hissage du moteur muni des bielles (26), du palonnier (28), de la ferrure de jonction (40) et de la ferrure supplémentaire (52) en direction du mât (8) muni de la ferrure de raccordement (24),
- de mise en correspondance des alésages de la ferrure de raccordement (24), de la ferrure de jonction (40) et de la ferrure supplémentaire (52),
- d'insertion dans lesdits alésages d'un axe de liaison (39) latéralement par rapport au plan médian (Pm) vertical et longitudinal du dispositif d'accrochage.

10. Procédé de montage d'un moteur d'aéronef sur un mât selon la revendication 9 comportant également l'étape de fixation de la ferrure de jonction et de la ferrure supplémentaire (52) sur la ferrure de raccordement (24) selon une direction non parallèle à l'axe de liaison (39).

## Claims

1. Attachment device for an aircraft engine comprising a rigid structure and attachment means for said engine on said rigid structure, said attachment means comprising a device (14) to take up thrust forces generated by the engine, said thrust take-up device (14) comprising two connecting rods (26) mechanically connected to a spreader (28) at an aft end (26b) through a first mechanical link, a connection fitting (24) fixed to the rigid structure to which the spreader (28) is mechanically connected by a junction fitting (40) by means of a connection pin (39) inserted orthogonal to a vertical and longitudinal median plane (Pm) of the attachment device, an additional fitting (52) to which the connecting rods (26), the spreader (28) and the connection fitting (24) are mechanically connected, a clearance being provided at the mechanical link between the connecting rods and the additional fitting, the link between the additional fitting (52) and the connection fitting (24) being made using the connection pin connecting the connection fitting and the junction fitting, said connection pin (39) being inserted laterally, orthogonal to said median plane (Pm) of the attachment device.

2. Attachment device according to claim 1, in which the junction fitting comprises a plate (46) mechanically connected to the spreader (28) through a connection pin (48) at a first longitudinal end, and a clevis (42) into which the connection fitting (24) will fit at a second longitudinal end

3. Attachment device according to claim 1 or 2, in which each of the connecting rods (26) is mechanically connected to the spreader (28) through a connection pin (30), and in which the additional fitting (52) comprises a first clevis (54) into which the aft ends (26b) of the connecting rods (26) and the spreader (28) fit, of which two branches comprise bores (55, 57) to hold the ends of the connection pins (30) connecting the connecting rods (26) to the spreader (28) and the connection pin (48) connecting the spreader (28) to the junction fitting (40), and a second clevis (56) receiving the clevis (42) of the junction fitting (40), said second clevis (56) comprising branches in which a bore (58) is formed through which the connection pin (39) with the connection fitting (24) passes.

4. Attachment device according to claim 3, in which reinforcement ribs (62) are provided between the first clevis (54) and the second clevis (56) of the additional fitting (52).

5. Attachment device according to one of the previous claims, in which at least one tension screw (43) is provided between the junction fitting (40), the additional fitting (52) and the connection fitting (24), with an axis that is not parallel to the axis of the connection pin (39).

6. Attachment device according to one of the previous claims, also comprising a forward engine attachment (10) and an aft engine attachment (12), the aft engine attachment (12) being distinct from the force take-up device.

7. Engine assembly (1) comprising an engine (6) and an engine attachment device (6), **characterised in that** said attachment device is a device according to any one of the previous claims.

8. Aircraft comprising at least one engine assembly according to claim 7, assembled on a wing or an aft part of the fuselage of this aircraft.

9. Method for assembling an aircraft engine on a pylon using an attachment device according to one of claims 1 to 6 comprising the following steps:
- hoisting the engine fitted with its connecting rods (26), the spreader (28), the junction fitting (40) and the additional fitting (52) towards the pylon (8) fitted with the connection fitting (24),
- making the bores in the connection fitting (24), the junction fitting (40) and the additional fitting (52) correspond to each other,
- inserting a connection pin (39) transverse to the vertical and longitudinal median plane (Pm) of the attachment device, into said bores.

10. Method for assembling an aircraft engine on a pylon according to claim 9 also comprising the junction fitting and additional fitting (52) attachment step onto the connection fitting (24) along a direction not parallel to the connection pin (39).

## Patentansprüche

1. Aufhängevorrichtung für ein Luftfahrzeugtriebwerk, die eine starre Struktur und Mittel zum Aufhängendes Triebwerks an der starren Struktur aufweist, wobei die Aufhängemittel eine Vorrichtung (14) zur Aufnahme von durch das Triebwerk erzeugten Schubkräften aufweisen, wobei die Vorrichtung zur Aufnahme von Kräften (14) zwei Stangen (26), die durch eine erste mechanische Verbindung auf der Höhe eines hinteren Endes (26b) mechanisch mit einer Traverse (28) verbunden sind, einen an der starren Struktur befestigten Anschlußbeschlag (24), mit dem die Traverse (28) durch einen Verbindungsbeschlag (40) mittels einer Verbindungsachse (39), die senkrecht zu einer zur Aufhängevorrichtung vertikalen und longitudinalen Mittelebene (Pm) eingeführt ist, mechanisch verbunden ist, und einen Zusatzbeschlag (52), mit dem die Stangen (26), die Traverse (28) und der Anschlußbeschlag (24) mechanisch verbunden sind, aufweist, wobei ein Spiel auf der Höhe der mechanischen Verbindung zwischen den Stangen und dem Zusatzbeschlag vorgesehen ist, und wobei die Verbindung zwischen dem Zusatzbeschlags (52) und dem Anschlußbeschlag (24) mittels der Verbindungsachse, die den Anschlußbeschlag und den Verbindungsbeschlag verbindet, realisiert ist, wobei die Verbindungsachse (39) seitlich, orthogonal zur Mittelebene (Pm) der Aufhängevorrichtung eingeführt wurde.

2. Aufhängevorrichtung nach Anspruch 1, wobei der Verbindungsbeschlag an einem ersten Längsende eine Platte (46), die mit der Traverse (28) durch eine Verbindungsachse (48) mechanisch verbunden ist, und an einem zweiten Längsende eine Kappe (42) zur Aufnahme des Anschlußbeschlags (24) aufweist.

3. Aufhängevorrichtung nach Anspruch 1 oder 2, wobei jede der Stangen (26) mit der Traverse (28) durch eine Verbindungsachse (30) mechanisch verbunden ist, und wobei der Zusatzbeschlag (52) eine erste Kappe (54) aufweist, die die Hinterenden (26b) der Stangen (26) und die Traverse (28) aufnimmt und deren zwei Schenkel Bohrungen (55, 57) zur Aufnahme der Enden der Verbindungsachsen (30), die die Stangen (26) mit der Traverse (28) verbinden, und der Verbindungsachse (48), die die Traverse (28) mit dem Verbindungsbeschlag (40) verbindet, aufweisen, und eine zweite Kappe (56) aufweist, die die Kappe (42) des Verbindungsbeschlags (40) aufnimmt, wobei die zweite Kappe (56) Schenkel aufweist, die mit einer Bohrung (58) zum Hindurchführen der Verbindungsachse (39) mit dem Anschlußbeschlag (24) ausgestattet sind.

4. Aufhängevorrichtung nach Anspruch 3, wobei Verstärkungsrippen (62) zwischen der ersten Kappe (54) und der zweiten Kappe (56) des Zusatzbeschlags (52) angebracht sind.

5. Aufhängevorrichtung nach einem der vorhergehenden Ansprüche, wobei mindestens eine Zugschraube (43) zwischen dem Verbindungsbeschlag (40), dem Zusatzbeschlag (52) und dem Anschlußbeschlag (24) angebracht ist, wobei deren Achse nicht parallel zur Verbindungsachse (39) ist.

6. Aufhängevorrichtung nach einem der vorhergehenden Ansprüche, die auch eine vordere Triebwerkbefestigung (10) und eine hintere Triebwerkbefestigung (12) aufweist, wobei die hintere Triebwerkbefestigung (12) von der Vorrichtung zur Aufnahme von Kräften verschieden ist.

7. Triebwerkanordnung (1), die ein Triebwerk (6) und eine Aufhängevorrichtung für ein Triebwerk (6) umfaßt, **dadurch gekennzeichnet, dass** die Aufhängevorrichtung eine Vorrichtung gemäß einem der vorhergehenden Ansprüche ist.

8. Luftfahrzeug, das mindestens eine Triebwerkanordnung nach Anspruch 7 aufweist, die an einer Tragfläche oder einem hinteren Teil des Rumpfes dieses Luftfahrzeugs angeordnet ist.

9. Verfahren zur Anbringung eines Luftfahrzeugtriebwerks an einer Struktur mittels einer Aufhängevorrichtung gemäß einem der Ansprüche 1 bis 6, umfassend die Schritte:
- Anheben des Triebwerks, das mit den Stangen (26), der Traverse (28), dem Verbindungsbeschlag (40) und dem Zusatzbeschlag (52) ausgestattet ist, in Richtung der Struktur (8), die mit dem Anschlußbeschlag (24) ausgestattet ist,
- Ausrichten der Bohrungen des Anschlußbeschlags (24), des Verbindungsbeschlags (40) und des Zusatzbeschlags (52) zur Übereinstimmung,
- Einführen einer Verbindungsachse (39) in die Bohrungen von der Seite aus in Bezug auf die zur Aufhängevorrichtung vertikalen und longitudinalen Mittelebene (Pm).

10. Verfahren zur Anbringung eines Luftfahrzeugtriebwerks an einer Struktur nach Anspruch 9, wobei das Verfahren auch den Schritt der Befestigung des Verbindungsbeschlags und des Zusatzbeschlags (52) an dem Anschlußbeschlag (24) in einer Richtung, die zur Verbindungsachse (39) nicht parallel ist, aufweist.
